# EUROPÄISCHE PATENTSCHRIFT

(11) **EP 3 273 216 B1**
(45) Veröffentlichungstag und Bekanntmachung des Hinweises auf die Patenterteilung: **08.04.2020**
(21) Anmeldenummer: 17182264.6
(22) Anmeldetag: 20.07.2017
(51) Int. Cl.: G01M 17/013

(54) **MESSFELGE UND AUSWERTEEINHEIT ZUM ERMITTELN VON MONTAGEKRÄFTEN BEI DER REIFENMONTAGE**
MEASURING RIM AND EVALUATION UNIT FOR DETERMINING OF MOUNTING FORCES IN TYRE ASSEMBLING
JANTE DE MESURE ET UNITÉ D'ÉVALUATION DESTINÉES À DÉTERMINER DES FORCES DE MONTAGE LORS DU MONTAGE DE PNEU

(30) Priorität: 22.07.2016 DE 102016113575
(43) Veröffentlichungstag der Anmeldung: 24.01.2018
(73) Patentinhaber: Technische Universität Darmstadt, 64289 Darmstadt (DE)
(72) Erfinder: Bockenheimer, Alexander, 64625 Bensheim (DE); Löchner, Kai, 64397 Modautal / Ernsthofen (DE); Mularczyk, Michael, 63225 Langen (DE); Heisel, Dark, 64367 Mühltal (DE); Oechnser, Matthias, 64283 Darmstadt (DE); Veith, Ludwig, 64297 Eberstadt (DE); Nickel, Daniela, 09569 Oederan (DE)
(74) Vertreter: LifeTech IP Spies & Behrndt Patentanwälte PartG mbB

(56) Entgegenhaltungen:
- EP-A1- 0 311 075
- EP-A1- 2 682 733
- WO-A1-2005/108945
- DE-A1- 10 001 272
- ES-A1- 2 566 048
- US-A1- 2002 001 073
- US-A1- 2008 271 541
- US-A1- 2009 310 119
- US-B1- 6 799 479

## Beschreibung

Die vorliegende Erfindung bezieht sich auf eine Messfelge zum Erfassen zumindest einer Dehnungskomponente bei der Reifenmontage und eine Auswerteeinheit und insbesondere auf eine drahtlose Messwerterfassung von einer Fahrzeugfelge zur Bestimmung von Montagekräften und deren Verteilungen an Reifen.

### Hintergrund

Um eine sichere und schadenfreie Montage und Demontage von Reifen, insbesondere von Ultra-High-Performance- (UHP) und Run-Flat-Reifen, bei Verwendung von handelsüblichen Montagemaschinen sicherzustellen, ist eine zulässige Beanspruchbarkeit des Reifens nicht zu überschreiten. Gleiches trifft für die Felge zu. Bei konventionellen Systemen werden dafür die Kräfte (Drehmoment des Antriebs), die beispielsweise bei der Montage (Aufziehen) des Reifens von einer Montagevorrichtung ausgeübt werden, indirekt gemessen.

Damit können jedoch lediglich bestimmte Kraftkomponenten gemessen werden. Um einen Schutz eines Reifens zu gewährleisten, ist es wünschenswert, möglichst das gesamte Kraftfeld zu messen, das auf den Reifen bei der Montage oder im Anschluss an die Montage wirkt. Um beispielsweise eine objektive Bewertung von Reifenmontagevorrichtungen vorzunehmen, sollten möglichst viele Kraftkomponenten oder idealerweise das gesamte Kraftfeld ermittelt werden. Damit könnte dann sichergestellt werden, dass eine bestimmte Reifenmontagevorrichtung die Reifen nur im Rahmen tolerierbarer Grenzen beansprucht und nicht beschädigt.

Bisher ist die Ermittlung eines solchen Kraftfeldes lediglich dadurch möglich, dass der Reifen nach der Montage zerstört wird und anhand von mikroskopischen Änderungen des Reifens.

Abgesehen von der dafür erforderlichen Zerstörung, ist eine solche Prüfung häufig nur dann möglich, wenn der Reifen wieder von der Felge demontiert wird und anschließend untersucht wird. Die Demontage kann jedoch zu weiteren Schädigungen des Reifens führen und eine eindeutige Bewertung der Ergebnisse hinsichtlich der Belastung (ob die Kräfte während der Montage oder während der Demontage auftreten), ist im Allgemeinen nicht möglich. Die auf den Reifen auftretenden Kräfte werden ansonsten während der Fahrt, wie Dokument EP 2 682 733 A1 offenbart, gemessen.

Es wäre zwar ebenfalls möglich, Messinstrumente in dem Reifen zu verteilen, um das Kraftfeld entlang des gesamten Reifens zu erfassen. Diese Lösung wäre jedoch sehr aufwendig und würde spezifische Reifen erfordern, die nur für diesen Zweck zum Einsatz kommen würden. Außerdem gestaltet sich das Anordnen von entsprechenden Messaufnehmern in der Praxis als sehr schwierig und die resultierenden Messdaten sind mit einer hohen Schwankungsbreite behaftet, so dass ihre Qualität sehr stark eingeschränkt ist.

Aus den genannten Gründen sind alternative Lösungen wünschenswert, die eine Erfassung des Kraftfeldes während der Reifenmontage ermöglicht.

### Zusammenfassung

Zumindest ein Teil der obengenannten technischen Probleme wird durch eine Auswerteeinheit nach Anspruch 1 und ein Verfahren nach Anspruch 5 gelöst. Die abhängigen Ansprüche 2 bis 4 beziehen sich auf vorteilhafte Weiterbildungen des unabhängigen Anspruchs 1.

Beispiele beziehen sich auf eine Messfelge zum Erfassen zumindest einer Dehnungskomponente, die eine Montagevorrichtung bei einer Reifenmontage verursacht. Die Messfelge umfasst ein Felgenbett, das durch ein Felgenhorn begrenzt wird und ausgebildet ist, um den Reifen zu halten. Die Messfelge umfasst weiter Dehnungsmessmittel zum Erfassen der Dehnungskomponente, die bei der Reifenmontage auftritt.

Der vorliegenden Erfindung liegt die Idee zugrunde, dass es nicht zwingend erforderlich ist, die Kräfte an der Montagevorrichtung selbst zu messen, sondern dass auch jene Kräfte gemessen werden können, die notwendig sind, um die Felge in einer Position zu halten, wenn die Reifewulst beginnend an einer vorbestimmten Position der Felge über das Felgenhorn geführt wird. Diese Position wird auch als Mitnahmepunkt oder Traktionspunkt bezeichnet. An dieser Stelle können sehr große Kräfte auf den Reifenwulst wirken und zu messbaren Dehnungen an der Felge führen.

Die Messfelge braucht somit nicht stationär und insbesondere nicht fest mit der Montagevorrichtung verbunden zu sein. Vielmehr kann die Messfelge einer handelsüblichen Felge entsprechen, die gegebenenfalls zur Dehnungsmessung mit einem entsprechenden Sensor oder einer temporären Markierung versehen und über beispielsweise optische Methoden ausgewertet wird. Bei weiteren Ausführungen umfassen die Dehnungsmessmittel zumindest einen Kraftsensor, wobei der zumindest eine Kraftsensor ausgebildet ist, um die bei der Montage des Reifens auf die Felge einwirkende Kraft zu erfassen.

Optional umfasst der Kraftsensor zumindest einen Dehnungsmessstreifen, der an einer vorbestimmten Position auf der Messfelge angeordnet ist, um an dieser Position eine auftretende Dehnung während der Reifenmontage zu erfassen.

Es versteht sich, dass der Begriff "Dehnung" in einer direkten Beziehung zu einer Spannung (Kraft pro Fläche) steht, wobei die Beziehung durch das Spannungs-Dehnungsgesetz bestimmt ist und von dem konkreten Material und der Geometrie der Messfelge abhängt.

Es versteht sich weiter, dass durch ein Erfassen der Kraft an der Felge gleichzeitig die Kraft gemessen wird, die auf den Reifen von der Montagevorrichtung ausgeübt wird. Die an der Felge gemessene Kraft ist nichts anderes als die Gegenkraft zu der Kraft, die von der Montagevorrichtung aufgebracht wird, um den Reifen auf die Felge aufzubringen (jede Kraftanwendung erzeugt eine gleich große Gegenkraft). Daher kann die durch die Montagevorrichtung erzeugte Kraft genauso durch die Gegenkraft ermittelt werden, die die Felge während der Montage auszuhalten hat. Somit kann durch eine Erfassung der Kräfte/Dehnungen an der Felge auf eine Beanspruchung des Reifens während der Montage geschlossen werden.

Optional umfasst der Kraftsensor eine Schnittstelle zur drahtlosen Informationsübertragung (z.B. Funknetz-basiert), die ausgebildet ist, um durch den Kraftsensor ermittelte Sensordaten an eine Auswerteeinheit weiterzuleiten.

Bei weiteren Ausführungen umfassen die Dehnungsmessmittel eine optisch erfassbare Oberflächenstruktur. Die optisch erfassbare Oberflächenstruktur ist beispielsweise ausgebildet, um bei einem Auftreten einer Spannung während der Reifenmontage sich so zu deformieren, dass die resultierende Dehnung optisch erfassbar ist. Die optisch erfassbare Oberflächenstruktur kann beispielsweise ganzflächig (z.B. auf einer Außenseite) auf der Felge ausgebildet sein, um eine Kraftverteilung während der Reifenmontage zu erfassen. Zum Beispiel kann die Oberflächenstruktur ein bestimmtes Muster aufweisen und die Erfassung der Spannung kann beispielhaft durch das Verfahren der Grauwertkorrelation erfolgen (z.B. der Ermittlung der Verschiebungen/Drehungen von Grauwerten).

Optional kann die optisch erfassbare Oberflächenstruktur auf beiden Seiten der Messfelge ausgebildet sein. Damit wird eine verbesserte Erfassung des gesamten Kraftfeldes möglich.

Die Auswerteeinheit gemäß der Erfindung ermittelt eine Beanspruchung eines Reifens während der Reifenmontage durch die Montagevorrichtung. Die Auswerteeinheit umfasst eine Empfangseinrichtung, die ausgebildet ist, um Signale von den Dehnungsmessmittel zu empfangen, die von den Spannungen während der Reifenmontage abhängen, und eine Verarbeitungseinheit zur Auswertung der Messergebnisse.

Optional kann die Empfangseinrichtung ausgebildet sein, um eine Deformation eines optischen Musters auf der Messfelge zu erfassen und durch die Verarbeitungseinheit auszuwerten, um basierend darauf eine Beanspruchung des Reifens zu ermitteln.

Optional kann die Auswerteeinheit ausgebildet sein, um ein funkbasiertes Signal von einem Kraftsensor von der Messfelge zu empfangen, um basierend auf den empfangenen Informationen die Beanspruchung des Reifens zu ermitteln.

Beispiele beziehen sich auch auf ein System mit einer zuvor beschriebenen Messfelge und einer zuvor beschriebenen Auswerteeinheit.

Die vorliegende Erfindung bezieht sich auch auf ein Verfahren nach Anspruch 5 zum Beurteilen einer Reifenmontagevorrichtung. Das Verfahren umfasst: ein Aufbringen eines Reifens auf die zuvor beschriebene Messfelge; ein Erfassen zumindest einer Dehnungskomponente der Messfelge, die bei dem Aufbringen des Reifens auftritt; und ein Bestimmen zumindest einer Kraftkomponente, die durch die Reifenmontagevorrichtung aufgebracht wird, um basierend darauf, eine Beurteilung der Reifenmontagevorrichtung zu ermöglichen.

Mit diesem Verfahren wird es möglich, die mechanische Beanspruchung des Reifens und der Felge während der Reifenmontage quantitativ zu erfassen. Hierdurch wird eine Basis für eine Bewertung einer sicheren und schadensfreien Montage und somit der Eignung für eine Reifenmontagemaschine geschaffen. Insbesondere können Ausführungsbeispiele daher für eine objektive Bewertung von Reifenmontagevorrichtungen z.B. genutzt werden (z.B. für bestimmte Reifentypen), da sie ein genaues Abbild der durch die Maschine aufgebrachten Kraftfelder ermöglichen und somit sicherstellen können, dass der Reifen während der Montage keine Schäden erleidet.

Die vorliegende Erfindung löst daher zumindest einen Teil der eingangs genannten Probleme durch die Verwendung einer spezifischen Felge.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine schematische Darstellung Messfelge nach einem Ausführungsbeispiel der vorliegenden Erfindung.
- Fig. 2: zeigt eine Messfelge mit einem optischen Muster nach einem weiteren Ausführungsbeispiel der vorliegenden Erfindung.
- Fig. 3: zeigt ein Flussdiagramm für ein Verfahren zum Beurteilen einer Reifenmontagevorrichtung nach weiteren Ausführungsbeispielen.

### Detaillierte Beschreibung

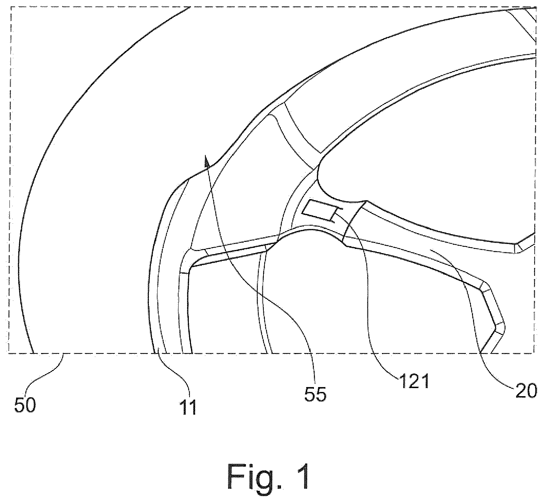

**Fig. 1** zeigt eine Messfelge zum Erfassen zumindest einer Dehnungskomponente, die eine Montagevorrichtung bei einer Reifenmontage verursacht. Die Messfelge umfasst ein Felgenbett, das durch ein Felgenhorn 111 begrenzt wird und ausgebildet ist, um den Reifen 50 zu halten. Die Messfelge umfasst weiter Dehnungsmessmittel 121 zum Erfassen der Dehnungskomponente, die bei der Reifenmontage auftritt.

Bei dem gezeigten Beispiel umfassen die Dehnungsmessmittel beispielhaft zumindest einen Dehnungsmessstreifen 121. Eine beliebige Anzahl von Dehnungsmessstreifen 121 kann an beliebigen Positionen der Messfelge angeordnet werden. Eine vorteilhafte Position ist beispielsweise entlang der einzelnen Speichen 20, die an der Felge ausgebildet sind. Mit diesem Dehnungsmessstreifen 121 wird es möglich, dass während der Reifenmontage die Kräfte, die beispielsweise auf die Speichen 20 einwirken, gemessen werden.

Optional kann der Dehnungsmessstreifen 121 mit einer Einrichtung zur drahtlosen Übertragung der Messwerte gekoppelt sein. Die Einrichtung zur drahtlosen Übertragung kann ebenfalls mit einer Auswerteeinheit (nicht gezeigt) drahtlos verbunden sein, die die erfassten Messwerte auszuwerten.

Bei weiteren Ausführungsbeispielen ist es daher möglich, eine funkbasierte oder drahtlose Übertragung von Messwerten von der Felge auf die entsprechende Auswerteeinheit durchzuführen, so dass die Handhabung des Rades vor, während und nach dem Montageprozess erfasst und verbessert werden kann. Optional ist es ebenfalls möglich, eine Verkabelung des Rades durchzuführen, um so die erfassten Werte beispielsweise in einem Datenspeicher zu speichern. Der Vorteil einer instrumentierten und Funknetz-basierten Messfelge ist, dass eine objektive Ermittlung von Montagekraftverläufen an definierten Messstellen oder von Montagekraftverteilungskarten ermöglicht wird.

In der Fig. 1 ist beispielhaft ein Reifen 50 gezeigt, dessen Reifenwulst entlang eines Traktionspunktes 55 hinter das Felgenhorn 111 gedrückt wird. Es ist dabei vorteilhaft, wenn zumindest ein Dehnungsmessstreifen 121 direkt an einem Traktionspunkt 55 angeordnet ist, d.h. dort wo der Reifenwulst vor bzw. hinter dem Felgenhorn sitzt. Bei der aufgewendeten Druckkraft kommt es zu einer Deformation der Felge, die zu Dehnungen entlang der Felge führt, die sich zeitlich ändern.

Bei der fortschreitenden Montage bzw. Demontage ist die Kraftmessung oder Wegaufnahmemessung entscheidend für die erzielbaren Messergebnisse. Daher kann eine Auswerteeinheit die zeitliche Änderung der erfassten Dehnungen auswerten und basierend darauf eine Beurteilung durchführen.

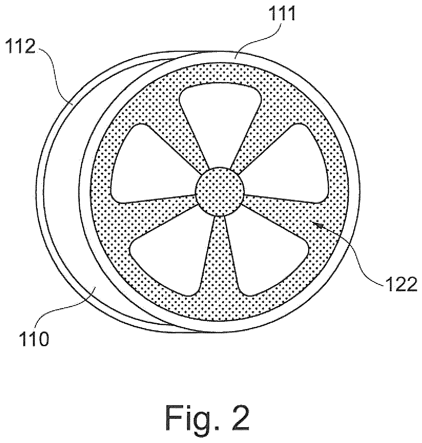

**Fig. 2** zeigt ein weiteres Beispiel, bei dem die Dehnungsmessmittel durch eine Oberflächenstruktur 122 (z.B. ein optisches Muster) auf zumindest einer Oberfläche der Felge gegeben sind. Auf die gezeigte Felge ist noch kein Reifen montiert. Daher ist das Felgenbett 110 sichtbar, welches seitlich von zwei Felgenhörnern 111, 112 begrenzt wird.

Wenn auf die Felge infolge einer Reifenmontage beispielsweise Kräfte einwirken, dann führen diese Kräfte dazu, dass sich das optische Muster lokal verändert. Diese Veränderungen sind lokal auftretende Dehnungen des Materials, die infolge des Spannungs-Dehnungsgesetzes für das jeweilige Material einer lokal wirkenden Kraftkomponente entsprechen.

Diese lokalen Dehnungswerte werden in weiteren Ausführungsbeispielen optisch erfasst. Beispielsweise kann dazu eine hochauflösende Kamera genutzt werden, die jede lokale Veränderung im optischen Muster erfasst. Die Auswerteeinheit kann wiederum darauf basierend die dort wirkenden Kräfte ermitteln. Die Änderung des auf das Bauteil ausgebildeten Musters kann beispielsweise durch eine Grauwertkorrelation oder Bildwertkorrelation analysiert werden. Dies ist jedoch nur ein Beispiel für das Messen von Dehnungswerten und die Erfindung soll nicht darauf eingeschränkt sein.

Optional ist es ebenfalls möglich, dass das optische Muster von beiden Seiten der Messfelge vorhanden ist, so dass es ebenfalls möglich wird, die Rück- und Vorderseite der Messfelge parallel zu messen.

Es versteht sich, dass die Messfelge gemäß den Beispielen nicht Teil der Montagevorrichtung ist, weder des Teiles, der eine Kraft auf den Reifen bei der Montage ausübt, noch des Teiles der Vorrichtung, die die Felge bei der Montage in einer vorbestimmten Position hält. Die Messfelge wird vielmehr durch die Reifenmontagevorrichtung gehalten, um darauf übliche Reifen zu montieren. Die Messfelge kann eine handelsübliche Fahrzeugfelge sein, auf die lediglich die Dehnungsmessmittel 121, 122 ausgebildet sind.

Es versteht sich, dass die Messfelge gemäß den Beispielen kein Messrad sein muss, sondern eine Felge, die nach Aufziehen eines Reifens zum Rad wird. Bei der Montage bzw. Demontage nutzen Ausführungsbeispiele insbesondere eine digitale, funkbasierte lokal aufgelöste Datenermittlung zur Messung von Kraft- bzw. Deformationsfeldern. Es werden im Allgemeinen nicht nur einzelne Messpunkte gemessen, sondern ein Kraftfeld über mehrere Messpunkte ermittelt. Die Ermittlung von Kraft- und Dehnungsfeldern erfolgt insbesondere mit optischen Methoden in Abhängigkeit vom Montagefortschritt. Dazu wird wie bereits dargelegt ein spezielles optisches Muster auf die Felge gebracht, dessen Deformation in Abhängigkeit von dem wirkenden Kraftfeld durch die Kamera oder einen optischen Sensor erfasst wird. Somit kann der Montagefortschritt beispielsweise mit einer zusätzlichen, extern angeordneten optischen Einheit aufgenommen und mit dem ermittelten Messfeld korreliert werden.

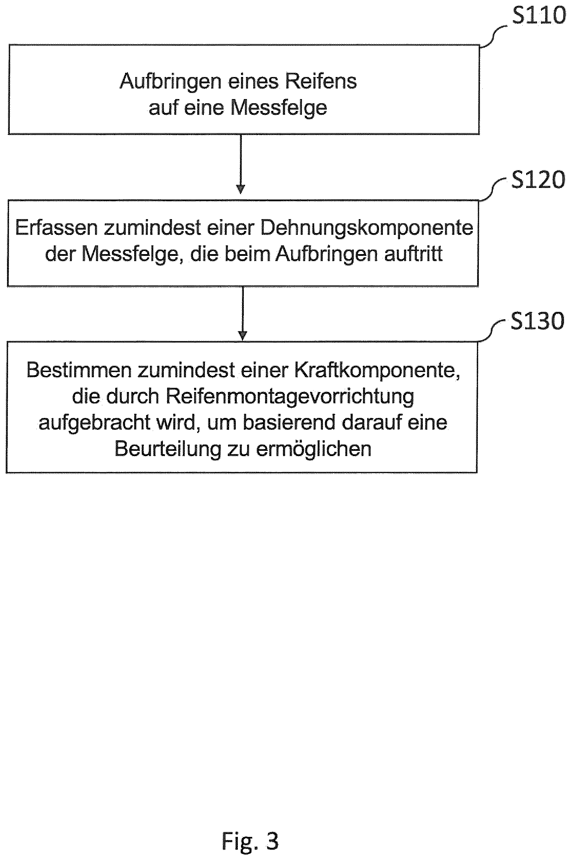

**Fig. 3** zeigt ein Flussdiagramm für ein Verfahren zum Beurteilen einer Reifenmontagevorrichtung. Das Verfahren umfasst die Schritte: Aufbringen S110 eines Reifens auf die Messfelge, Erfassen S120 zumindest einer Dehnungskomponente der Messfelge, die bei dem Aufbringen auftritt, und Bestimmen S130 zumindest einer Kraftkomponente, die durch Reifenmontagevorrichtung aufgebracht wird, um basierend darauf eine Beurteilung zu ermöglichen.

Die Beurteilung kann beispielsweise für eine objektive Bewertung von Montagemaschinen basierend auf den dokumentierten Montagekräften als Prüfkriterium und als Qualitätsmerkmal der Montagemaschinen genutzt werden. Somit wird die Wahrscheinlichkeit einer sicheren und schadensfreien Reifenmontage deutlich erhöht und ein Versagen von montierten Reifen während des Betriebes kann minimiert bzw. ausgeschlossen werden.

Wesentliche Aspekte der vorliegenden Erfindung können wie folgt zusammengefasst werden. Gemäß Ausführungsbeispielen erfolgt eine Instrumentierung einer Fahrzeugfelge durch Mittel zum Aufnehmen von Dehnungswerten. Diese Mittel können beispielsweise Dehnungsmessstreifen 121 zur Erfassung von lokalen Felgenbeanspruchungen nutzen. Aus der quantitativ erfassten Felgenbeanspruchung kann daran anschließend auf den Verlauf der Beanspruchung des Reifens geschlossen werden. Hierfür können die auf die Messfelge angebrachten Dehnungsaufnehmer 121 in Anzahl und Positionierung entsprechend dem Zweck angeordnet werden. Neben Dehnungsmessstreifen 121 sind weitere indirekte Wegaufnehmer 122 denkbar. Diese sind beispielsweise optische Muster 122, die auf die Felge aufgebracht werden können und die sich bei der Beanspruchung der Felge entsprechend ändern. Beispielsweise kann somit durch eine hochauflösende Kamera jedes lokal verändertes optisches Muster genutzt werden, um die dort wirkenden Dehnungskräfte zu erfassen und somit ein Kraftfeld für die gesamte Felge und dadurch für den Reifen zu erhalten.

Die Dehnungsaufnehmer 121 können beispielsweise für Einzelmessungen an bestimmten neuralgischen Punkten genutzt werden. Sie können jedoch ebenfalls dafür genutzt werden, um definierte Kraftfelder zu ermitteln. Somit sind Ausführungsbeispiele der vorliegenden Erfindung praktikabel und vielseitig als instrumentierte Messfelge einsetzbar. Ein weiterer Vorteil von Ausführungsbeispielen besteht darin, dass die Messwertübermittlung über eine Telemetrie erfolgen kann, die eine sofortige Auswertung selbst bei einer Bewegung der Felge erlaubt.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Bezugszeichenliste

- 50: Reifen
- 55: Traktionspunkt
- 110: Felgenbett
- 111, 112: Felgenhorn
- 120: Oberflächenstruktur Muster
- 121: Dehnungsmessstreifen
- 122: Dehnungsmessmittel

## Patentansprüche

1. Auswerteeinheit zur Beurteilung einer Reifenmontagevorrichtung unter Nutzung einer Messfelge, wobei die Messfelge Folgendes umfasst: ein Felgenbett (110), das durch ein Felgenhorn (111, 112) begrenzt wird und ausgebildet ist, um einen Reifen (50) zu halten, und Dehnungsmessmittel (121; 122) zum Erfassen der Dehnungskomponente, die bei der Reifenmontage auftritt, mit folgenden Merkmalen:
eine Empfangseinrichtung, die ausgebildet ist, um Signale von den Dehnungsmessmittel zu empfangen, die von den Spannungen während der Reifenmontage abhängen; und
eine Verarbeitungseinheit, die ausgebildet ist, um eine Beanspruchung eines Reifens während der Reifenmontage durch eine Montagevorrichtung zu ermitteln und **dadurch gekennzeichnet, dass** die Verarbeitungseinheit dazu ausgebildet ist, die Reifenmontagevorrichtung basierend auf die Beanspruchung des Reifens zu beurteilen.

2. Auswerteeinheit nach Anspreche 1, wobei die Empfangseinrichtung ausgebildet ist, um insbesondere einen zeitlichen Verlauf von Dehnungswerte zu erfassen, und die Verarbeitungseinheit ausgebildet ist, um erfasste Daten auszuwerten und basierend darauf eine Beanspruchung des Reifens zu ermitteln.

3. Auswerteeinheit nach Anspruch 1 oder Anspruch 2, wobei die Empfangseinrichtung ausgebildet ist, um eine Deformation eines optischen Musters auf der Messfelge zu erfassen.

4. Auswerteeinheit nach einem der Ansprüche 1 bis 3, wobei die Auswerteeinrichtung ausgebildet ist, um ein funkbasiertes Signal von einem Kraftsensor von der Messfelge zu empfangen.

5. Verfahren zum Beurteilen einer Reifenmontagevorrichtung, mit folgenden Schritten:
Aufbringen (S110) eines Reifens auf eine Messfelge, wobei die Messfelge Folgendes umfasst: ein Felgenbett (110), das durch ein Felgenhorn (111, 112) begrenzt wird und ausgebildet ist, um einen Reifen (50) zu halten, und Dehnungsmessmittel (121; 122) zum Erfassen der Dehnungskomponente, die bei der Reifenmontage auftritt; **gekennzeichnet durch** das Erfassen (S120) zumindest einer Dehnungskomponente der Messfelge, die bei dem Aufbringen (S110) auftritt; und
Bestimmen (S130) zumindest einer Kraftkomponente, die durch Reifenmontagevorrichtung aufgebracht wird, um basierend darauf eine Beurteilung zu ermöglichen.

## Claims

1. Evaluation unit for assessing a tire assembling apparatus by use of a measuring rim, wherein the measuring rim comprises the following: a rim well (110) which is bounded by a rim flange (111, 112) and configured to hold a tire (50), and strain measuring equipment (121; 122) for a recording of the strain component which develops during the tire assembling, with the following:
a receiving appliance, configured to receive signals from the strain measuring equipment depending on strains during the tire assembling; and
a processing unit, configured to determine a stress of a tire during the tire assembling by an assembling apparatus and
**characterized in that**
the processing unit is configured to assess the tire assembling apparatus based on the stress of the tire.

2. Evaluation unit according to claim 1, wherein the receiving appliance is configured to record in particular a temporal progress of strain values, and the processing unit is configured to evaluate recorded data and based thereon to determine a stress of the tire.

3. Evaluation unit according to claim 1 or claim 2, wherein the receiving appliance is configured to record a deformation of an optical pattern on the measuring rim.

4. Evaluation unit according to one of the claims 1 to 3, wherein the evaluation appliance is configured to receive a radio based signal from a force sensor from the measuring rim.

5. Method for assessing a tire assembling apparatus, comprising the following steps:
Assembling (S110) of a tire to a measuring rim, wherein the measuring rim comprises the following: a rim well (110) which is bounded by a rim flange (111, 112) and configured to hold a tire (50), and strain measuring equipment (121; 122) for a recording of the strain component which develops during the tire assembling,
**characterized by** the
Recording (S120) of at least one strain component of the measuring rim which develops during the fitting (S110); and
Determining (S130) of at least one force component which is exerted by tire assembling apparatus, in order to based thereon enable an assessment.

## Revendications

1. Unité d'évaluation pour évaluer un dispositif de montage de pneus utilisant une jante de mesure, dans laquelle la jante de mesure comprend :
un lit de jante (110) défini par un rebord de jante (111, 112) et adapté pour maintenir un pneu (50), et des moyens de mesure de contrainte (121 ; 122) pour détecter la composante de contrainte se produisant pendant le montage du pneu, comprenant les caractéristiques suivantes :
un dispositif de réception adapté pour recevoir des signaux des moyens de mesure de contrainte en fonction des contraintes pendant le montage du pneu ; et
une unité de traitement adaptée pour déterminer une sollicitation d'un pneu pendant le montage du pneu par un dispositif de montage et **caractérisée en ce que** l'unité de traitement est adaptée pour évaluer le dispositif de montage du pneu sur la base de la sollicitation du pneu.

2. Unité d'évaluation selon la revendication 1, dans laquelle le dispositif de réception est conçu en particulier pour détecter une courbe temporelle de valeurs d'allongement, et l'unité de traitement est conçue pour évaluer les données détectées et, sur la base de celles-ci, pour déterminer une sollicitation du pneu.

3. Unité d'évaluation selon la revendication 1 ou la revendication 2, dans laquelle le dispositif de réception est conçu pour détecter une déformation d'un motif optique sur la jante de mesure.

4. Unité d'évaluation selon l'une quelconque des revendications 1 à 3, dans laquelle l'unité d'évaluation est conçue pour recevoir un signal radio d'un capteur de force de la jante de mesure.

5. Procédé d'évaluation d'un appareil de montage de pneus, comprenant les étapes suivantes :
l'application (S110) d'un pneu sur une jante de mesure, la jante de mesure comprenant :
un lit de jante (110) défini par un rebord de jante (111, 112) et adaptée pour maintenir un pneu (50), et des moyens de mesure de contrainte (121 ; 122) pour détecter la composante de contrainte apparaissant pendant le montage du pneu ;
**caractérisé par**
la détection (S120) d'au moins une composante de contrainte de la jante de mesure qui se produit pendant l'application (S110) ; et
la détermination (S130) d'au moins une composante de force appliquée par un appareil de montage de pneu pour permettre une évaluation basée sur celle-ci.
